# EUROPÄISCHE PATENTSCHRIFT

(11) **EP 4 401 945 B1**
(45) Veröffentlichungstag und Bekanntmachung des Hinweises auf die Patenterteilung: **24.12.2025**
(21) Anmeldenummer: 22789869.9
(22) Anmeldetag: 13.09.2022
(51) Int. Cl.: B29C 49/54, B29C 49/06, B29C 49/12, B29C 49/58, B29C 49/48, B29L 31/00

(54) **FORMWERKZEUG UND VERFAHREN**
MOULD AND METHOD
MOULE ET PROCÉDÉ

(30) Priorität: 14.09.2021 CH 0702662021
(43) Veröffentlichungstag der Anmeldung: 24.07.2024
(73) Patentinhaber: Alpla-Werke Alwin Lehner GMBH & Co.KG, 6971 Hard (AT)
(72) Erfinder: DEMIR, Adem, 6923 Lauterach (AT); REHDERS, Andreas, 66919 Weselberg (DE)
(74) Vertreter: Swisspat Riederer Hasler Patentanwälte AG
(86) Internationale Anmeldenummer: PCT/EP2022/075431
(87) Internationale Veröffentlichungsnummer: WO 2023/041533

(56) Entgegenhaltungen:
- US-A1- 2006 231 985
- US-A1- 2008 283 533
- US-A1- 2015 328 825

## Beschreibung

### Gebiet der Erfindung

Die Erfindung betrifft ein Formwerkzeug zur Herstellung einer streckblasgeformten Polyester-Flasche und ein entsprechendes Verfahren.

### Stand der Technik

Streckblasgeformte Flaschen aus Polyester werden aus einem spritzgussgeformten Preform hergestellt, an welchem der Flaschenhals mit einem Aussengewinde bereits ausgebildet ist. Der Flaschenkörper wird in einer Blasform ausgeformt, indem der Preformkörper in der Blasform biaxial verstreckt wird. Die geschieht mittels eines Blasdorns.

Es versteht sich, dass die Entwicklungen bezüglich einer Produktivitätssteigerung darauf ausgerichtet sind die Zykluszeiten der Flaschenherstellung zu verkürzen. Das Problem dabei ist, dass bei kurzen Zykluszeiten eine gerade hergestellte Flasche die Eigenschaft von PET zum Tragen kommt, dass sich dieses beim Abkühlen in die Ausgangsform des Preforms zurückbilden will. Dies führt dazu, dass die Abformung des Bodens in der Serienherstellung nicht zuverlässig funktioniert. Das während des Streckblasens nach innen ausgeformte Teil des Bodens bildet sich zurück und schiebt sich demnach aus seiner inneren Position zurück in seine nach aussen gewölbte Form des Preformbodens. Durch dieses Rückstellen des Bodens ist die Standfestigkeit der Flasche nicht mehr gegeben.

Durch verlängerte Zykluszeiten oder verbesserte Kühlung liesse sich dieser Rückstell-Effekt verhindern. Allerdings sind diese Maßnahmen kostensteigernd und stellen dementsprechend eine unerwünschte Lösung dar.

In der US 2008/0283533 A1 ist ein Formwerkzeug mit einem Bodenteil offenbart, welches einen Sockel aufweist. An den Sockel schliesst ein Vorsprung an, welcher in dem Behälter während des Streckblasformens eine Aussparung ausformt. In den Behälter wird eine Flüssigkeit abgefüllt und die Aussparung kann von aussen mit einem festen Lebensmittel befüllt werden.

In der US 2015/0328825 A1 ist eine Kunststoffflasche zur Heissbefüllung beschrieben. Ein Bodenteil eines Formwerkzeuges formt während des Streckblasens einen Boden des Behälters mit einem nach unten gestülpten Bodenabschnitt. Der Bodenabschnitt stülpt sich während des Abkühlens des heissen Füllgutes nach oben, um den bei der Abkühlung in dem Behälter entstehenden Unterdruck zu kompensieren. Dadurch ist eine unkontrollierte Verformung des Behälters verhindert.

Auch in der US 2006/0231985 A1 ist ein Kunststoffbehälter mit einem nach innen stülpbarem Bodenabschnitt beschrieben. Zuerst wird der Bodenabschnitt in dem Formwerkzeug nach aussen ausgebildet. Zur Steigerung der Kristallinität fährt aus einem Bodenteil des Formwerkzeuges eine Schubstange aus und stülpt den Bodenabschnitt nach innen.

### Aufgabe der Erfindung

Aus den Nachteilen des beschriebenen Stands der Technik resultiert die Aufgabe eine Polyester-Flasche zu schaffen, welche auch bei reduzierten Zykluszeiten einen stabilen Stand aufweist und trotzdem kostengünstig herstellbar ist.

### Beschreibung

Die Lösung der gestellten Aufgabe gelingt bei einem Formwerkzeug zur Herstellung einer streckblasgeformten Polyester-Flasche durch die im kennzeichnenden Abschnitt des Patentanspruchs 1 angeführten Merkmale. Weiterbildungen und/oder vorteilhafte Ausführungsvarianten sind Gegenstand der abhängigen Patentansprüche.

An einem Bodenteil des Formwerkzeuges ist ein in den Innenraum des Formwerkzeuges ragender Sockel ausgebildet , deren Seitenwand einen Neigunsgwinkel von höchstens 5 Grad zur Vertikalachse des Formwerkzeuges besitzt und bevorzugt parallel zur Vertikalachse des Formwerkzeuges orientiert ist. Die Erfindung zeichnet sich dadurch aus, dass der Sockel das übrige Bodenteil mit einer Höhe zwischen 5 und 7 mm überragt. Der Sockel bildet an dem Flaschenboden eine Einbuchtung mit einer steilen Seitenwand. Die gewählte Höhenbemassung des Sockels zwischen 5 und 7 mm bewirkt, dass sich die Einbuchtung des Flaschenbodens nicht über die Standfläche des Flaschenbodens hinaus erstrecken kann und die Flasche instabil steht, da die Rückstellkraft des Polyesters dazu nicht ausreicht. Zusätzlich verstreckt der Sockel den Flaschenboden derart, dass Polyestermaterial weiter nach innen verstreckt wird. Dadurch wird die Rückstellkraft weiter reduziert und das reduzierte Polyestermaterial kühlt rascher ab. Die raschere Abkühlung führt zu einer weiteren Reduktion der Rückstellkraft des Bodens. Die in kurzer Zykluszeit hergestellte Flasche besitzt daher eine stabile Standfläche, da sich die Einbuchtung nicht mehr nach aussen über die Standfläche hinaus ausbeulen kann.

Als zweckdienlich hat es sich erwiesen, wenn an den unteren Enden der ersten und zweiten Formschale die Negativform für den äusseren Teil der Standfläche des Flaschenbodens ausgebildet ist. Nachdem die Formschalen offen sind, können die Negativformen der äusseren Standflächen vereinfachter hergestellt werden, als wenn diese am Bodenteil vorgesehen wären.

Zweckmässigerweise sind an dem Sockel im Anschluss an die Seitenwand die Negativform für den inneren Teil der Standfläche des Flaschenbodens ausgebildet. Die Negativformen lassen sich einfach herstellen, da das Bodenteil offen gestaltet ist und die an den Formteilen ausgebildeten Negativformen nicht an dem Bodenteil ausgebildet sind. Ein weiterer Aspekt der vorliegenden Offenbarung betrifft eine Polyester-Flasche, welche im oben beschriebenen Formwerkzeug hergestellt ist.

Die Erfindung zeichnet sich auch bevorzugt dadurch aus, dass die Einbuchtung eine Seitenwand aufweist, welche einen Seitenwandwinkel zur horizontalen Standfläche zwischen 60 und 80 Grad und bevorzugt zwischen 65 und 70 Grad aufweist. Der Seitenwandwinkel ist etwas kleiner als 90 Grad, da die Zähigkeit des Polyesters es nicht erlaubt, dass sich ein 90 Grad Winkel zur Horizontalen aufbaut. Der sich einstellende Seitenwandwinkel ist jedoch ausreichend steil bzw. gross, dass die Rückstellkräfte der Einbuchtung nicht ausreichen, dass selbige die Standfläche der Flasche überragt. Trotz einer Zykluszeit von weniger als 2 Sekunden hat die Flasche daher einen stabilen Stand. In einer weiteren besonders bevorzugten Ausführungsform der Erfindung ist das Polyestermaterial der Einbuchtung durch den steilen Seitenwandwinkel in Richtung des Flascheninneren zwangsverstreckt. Dadurch wird die Rückstellkraft der Einbuchtung in bevorzugter Weise reduziert.

Dadurch, dass durch den steilen Seitenwandwinkel die Rückstellkräfte des Polyesters der Einbuchtung reduziert sind, ist es verunmöglicht, dass sich die Einbuchtung rückbildet und sich über die Standfläche hinaus ausbeult.

Ein weiterer Aspekt der Erfindung betrifft ein Verfahren zur Herstellung einer Polyester-flasche in dem oben beschriebenen Formwerkzeug. Die Flasche wird mit einer Zykluszeit hergestellt, welche zwischen 10% bis 20% kürzer ist als die die Zykluszeit, welche für eine identische Flasche jedoch mit herkömmlich geformtem Boden benötigt wird. Die verkürzte Zykluszeit liegt zwischen 1,8 und 2 Sekunden. Trotz der sehr kurzen Zykluszeit besitzt die Flasche einen stabilen Stand.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: eine Schnittansicht eines Formwerkzeuges in einer geöffneten Position entlang der Vertikalachse und einer in dem Formwerkzeug hergestellten Polyester-Flasche und

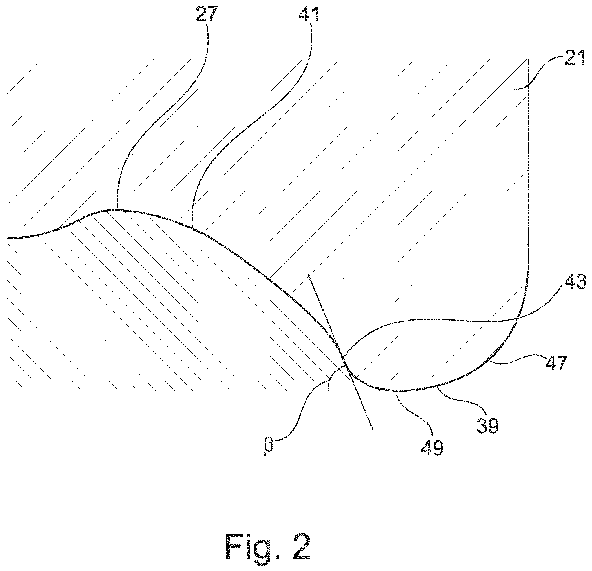

- Figur 2:: eine Detailansicht des Flaschenbodens.

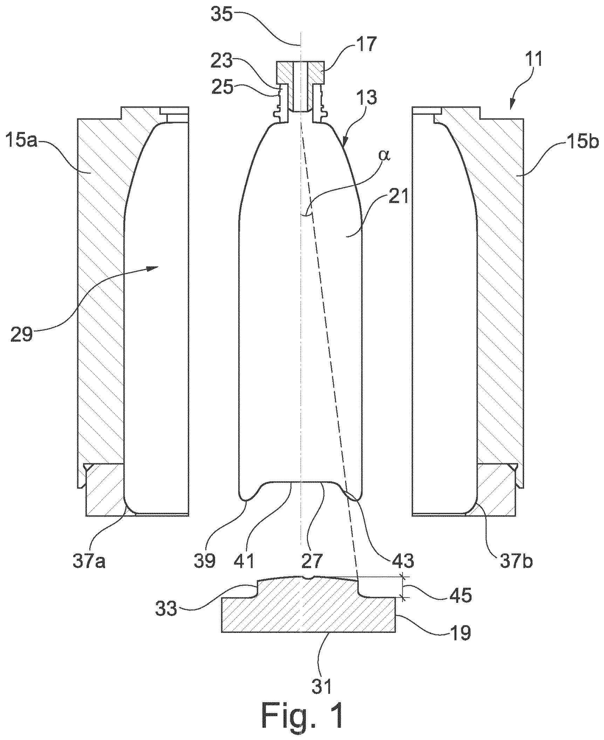

In der Figur 1 ist ein Formwerkzeug gezeigt, welches gesamthaft mit dem Bezugszeichen 11 bezeichnet ist. In dem Formwerkzeug 11 wird eine Polyester-Flasche 13 streckblasgeformt. Der Polyester kann PET, PEF oder ein anderer biobasierter Polyester sein.

Das Formwerkzeug 11 weist eine erste und zweite Formschale 15a,15b, einen Haltestopfen 17, einen Streckdorn (in der Figur 1 nicht dargestellt) und ein Bodenteil 19 auf. Die Formschalen 15a,15b und das Bodenteil 19 sind zwischen einer geöffneten Position und einer geschlossenen Position verschiebbar. In der geschlossenen Position wird ein vorerwärmter Preform durch Einfahren des Streckdorns in axialer Richtung verstreckt und durch Einleitung von Druckluft in den Streckdorn aufgeblasen, bzw. radial verstreckt. Die Polyester-Flasche 13 wird daher in bekannter Weise dadurch hergestellt, dass der Preform biaxial verstreckt wird. Nach dem Ausformen der Flasche 13 werden die Formschalen 15a,15b und das Bodenteil 19 in die geöffnete Position verschoben und die Flasche 13 wird aus dem Formwerkzeug 11 ausgeworfen.

Im Innenraum 29 zwischen den beiden geschlossenen Formschalen 15a,15b wird der Flaschenkörper 21 ausgeformt. An der Oberseite wird der Flaschenkörper 21 durch einen Flaschenhals 23, zumeist mit einem Aussengewinde 25, abgeschlossen. Der Flaschenhals 23 wird bei der Herstellung des Preforms spritzgegossen und bleibt während des Streckblasens unverändert. In den Flaschenhals 23 wird der Haltestopfen 17 eingefahren.

Der Flaschenboden 27, welcher den Flaschenkörper 21 an der Unterseite verschliesst, erhält seine Form durch das Bodenteil 19. An dem Bodenteil 19 ist ein in den Innenraum 29 des Formwerkzeugs 11 ragender Sockel 31 ausgebildet. Der Sockel 31 weist eine Seitenwand 33 auf, welche bevorzugt parallel zur Vertikalsachse 35 des Formwerkzeuges 11 ist. Denkbar ist es auch, dass die Seitenwand 33 einen kleinen Neigungswinkel α von höchstens 5 Grad zur Vertikalachse 35 aufweist.

Zwischen der Seitenwand 33 und den unteren Enden 37a,37b der Formschalen 15a,15b wird die Standfläche 39 ausgeformt. Die vertikale Seitenwand 33 ermöglicht es, dass der Sockel 31 an dem Flaschenboden 27 eine Einbuchtung 41 mit einer steilen Seitenwand 43 ausformt. Der Seitenwandwinkel β ist bevorzugt zwischen 65 und 70 Grad gross, da der zähe Polyester sich nach der 90 Grad Ausformung des Winkels β durch den Sockel 31 noch etwas verkleinert.

Durch die 90° Verstreckung nach innen kann sich der Flaschenboden 27 nicht mehr nach außen wölben, auch wenn die Flasche 13 mit einer sehr kurzen Zykluszeit hergestellt wird, ist, welche zwischen 10% bis 20% kürzer ist als die die Zykluszeit, welche für eine identische Flasche jedoch mit herkömmlich geformtem Boden benötigt wird. Die Flasche 13 besitzt dadurch einen stabilen Stand, da die Einbuchtung 41 immer tiefer als die Standfläche 39 liegt. Gleichzeitig wird überflüssiges Material am Flaschenboden 27, weiter nach innen verstreckt. Durch die Zwangsverstreckung, verursacht durch den Sockel 31, ist im Bereich des Flaschenbodens 27 auch weniger Material vorhanden. Dieses reduzierte Material kühlt rasch ab, wodurch die Rückstellkraft der Einbuchtung zusätzlich zu dem steilen Seitenwandwinkel β verringert wird. Eine Sockelhöhe 45 von 5 bis 7 mm ist ausreichend um eine ausreichend tiefe Einbuchtung 41 zu schaffen.

Der äussere Teil 47 der Standfläche 39 wird an den unteren Enden der Formschalen 15a,15b ausgebildet. An dem Sockel 31 ist im Anschluss an die Seitenwand 33 die Negativform für den inneren Teil 49 der Standfläche 39 des Flaschenbodens 27 ausgebildet.

Die Ausgestaltung des Sockels 31, insbesondere dessen vertikale Seitenwand 33, führt dazu, dass sich die Einbuchtung 41, auch bei einer sehr kurzen Zykluszeit, zu keiner Zeit ausbeult bzw. nach aussen wandert. Die Zykluszeit ist typischerweise zwischen 10% bis 20% kürzer als die die Zykluszeit, welche für eine identische Flasche jedoch mit herkömmlich geformtem Boden benötigt wird. Dadurch kann die Polyester-Flasche 13 in kürzester Zeit in dem Formwerkzeug 11 hergestellt werden und besitzt trotzdem einen stabilen Stand.

### Legende:

- 11: Formwerkzeug
- 13: Polyester-Flasche
- 15a: Erste Formschale
- 15b: Zweite Formschale
- 17: Haltestopfen
- 19: Bodenteil
- 21: Flaschenkörper
- 23: Flaschenhals
- 25: Aussengewinde
- 27: Flaschenboden
- 29: Innenraum des Formwerkzeuges
- 31: Sockel
- 33: Seitenwand des Sockels
- 35: Vertikalsachse
- 37a: Unteres Ende der ersten Formaschale
- 37b: Unteres Ende der zweiten Formaschale
- 39: Standfläche
- 41: Einbuchtung
- 43: Seitenwand der Einbuchtung
- 45: Sockelhöhe
- 47: Äusserer Teil der Standfläche
- 49: Innerer Teil der Standfläche
- α: Neigungswinkel
- β: Seitenwandwinkel

## Patentansprüche

1. Formwerkzeug (11) zur Herstellung einer streckblasgeformten Polyester-Flasche (13) mit einem Flaschenhals (23), einem Flaschenkörper (21) und einem Flaschenboden (27) aus einem Preform, deren Formteile sich zwischen einer geöffneten Position und einer geschlossenen Position verschieben lassen, aufweisend
- eine erste und zweite Formschale (15a, 15b) innerhalb welcher in der geschlossenen Position der Flaschenkörper (21) ausformbar ist,
- einen Haltestopfen (17), welcher in den Flaschenhals (23) einfahrbar ist,
- einen Streckdorn mit Drucklufteinleitung zur biaxialen Verstreckung des Preforms und
- ein Bodenteil (19), welches die beiden Formschalen (15a,15b) an der Unterseite verschliesst und welches der Ausformung des Flaschenbodens (27) dient, wobei an dem Bodenteil (19) ein in den Innenraum (29) des Formwerkzeuges (11) ragender Sockel (31) ausgebildet ist, deren Seitenwand (33) einen Neigungswinkel (α) von höchstens 5 Grad zur Vertikalachse (35) des Formwerkzeuges (11) besitzt und bevorzugt parallel zur Vertikalachse (35) des Formwerkzeuges (11) orientiert ist.
**dadurch gekennzeichnet,**
**dass** der Sockel (31) mit einer Höhe (45) zwischen 5 und 7 mm das übrige Bodenteil (19) überragt.

2. Formwerkzeug nach Anspruch 1, **dadurch gekennzeichnet, dass** an den unteren Enden (37a,37b) der ersten und zweiten Formschale (15a,15b) die Negativform für den äusseren Teil (47) der Standfläche (39) des Flaschenbodens (27) ausgebildet ist.

3. Formwerkzeug nach Anspruch 1 oder 2, **dadurch gekennzeichnet, dass** an dem Sockel (31) im Anschluss an die Seitenwand (33) die Negativform für den inneren Teil (49) der Standfläche (39) des Flaschenbodens (27) ausgebildet ist.

4. Verfahren zur Herstellung einer Polyester-Flasche in dem Formwerkzeug gemäss den Ansprüchen 1 bis 3, **dadurch gekennzeichnet , dass** die Flasche (13) in dem Formwerkzeug (11) mit einer Zykluszeit zwischen 1,8 und 2 Sekunden hergestellt wird.

## Claims

1. A molding tool (11) for producing a stretch-blow-molded polyester bottle (13) with a bottle neck (23), a bottle body (21), and a bottle bottom (27) from a preform, the molded parts of which can be displaced between an open position and a closed position, comprising
- a first and a second mold shell (15a, 15b) within which the bottle body (21) can be molded in the closed position,
- a holding stopper (17) which can be inserted into the bottle neck (23),
- a blow pin having a compressed-air intake for biaxial stretching of the preform, and
- a bottom part (19) which closes the two mold shells (15a, 15b) on the bottom side and which is intended to mold the bottle bottom (27), wherein a base (31) is formed on the bottom part (19), which base projects into the interior (29) of the mold (11) and of which base the side wall (33) has an inclination angle (α) of at most 5 degrees with respect to the vertical axis (35) of the mold (11) and is oriented preferably in parallel with the vertical axis (35) of the mold (11).
**characterized in that**
the base (31) projects beyond the remaining bottom part (19) at a height (45) between 5 and 7 mm.

2. A mold according to claim 1, **characterized in that** the negative form for the outer part (47) of the standing surface (39) of the bottle bottom (27) is formed at the lower ends (37a, 37b) of the first and second mold shell (15a, 15b).

3. The mold according to claim 1 or claim 2, **characterized in that** the negative mold for the inner part (49) of the standing surface (39) of the bottle bottom (27) is formed on the base (31) following the side wall (33).

4. Process for producing a polyester bottle in the mold according to any of claims 1 to 3, **characterized in that** the bottle (13) is produced in the mold (11) with a cycle time between 1,8 and 2 seconds.

## Revendications

1. Outil de moulage (11) pour la fabrication d'une bouteille en polyester moulée par soufflage-étirage (13) avec un goulot de bouteille (23), un corps de bouteille (21) et un fond de bouteille (27) à partir d'une préforme, dont les parties de moule peuvent se déplacer entre une position ouverte et une position fermée, comportant
- une première et une deuxième coquille de moule (15a, 15b) à l'intérieur desquelles le corps de bouteille (21) peut être moulé en forme dans la position fermée,
- un bouchon de maintien (17), lequel peut être introduit dans le goulot de bouteille (23),
- un mandrin d'étirage avec entrée d'air comprimé pour l'étirage biaxial de la préforme et
- une partie de fond (19), laquelle ferme les deux coquilles de moule (15a, 15b) sur la face inférieure et laquelle sert au moulage en forme du fond de bouteille (27),
sachant qu'un socle (31) dépassant dans l'espace intérieur (29) de l'outil de moulage (11) est constitué sur la partie de fond (19), dont la paroi latérale (33) possède un angle d'inclinaison (α) de 5 degrés maximum par rapport à l'axe vertical (35) de l'outil de moulage (11) et est de préférence orienté parallèlement à l'axe vertical (35) de l'outil de moulage (11)
**caractérisé en ce que**
le socle (31) dépasse la partie de fond (19) résiduelle d'une hauteur (45) se situant entre 5 et 7 mm.

2. Outil de moulage selon la revendication 1, **caractérisé en ce que** le moule négatif pour la partie extérieure (47) de la base (39) du fond de bouteille (27) est constitué sur les extrémités inférieures (37a, 37b) de la première et de la deuxième coquille de moule (15a, 15b).

3. Outil de moulage selon la revendication 1 ou 2, **caractérisé en ce que** la moule négatif pour la partie intérieure (49) de la base (39) du fond de bouteille (27) est constitué sur le socle (31) à la suite de la paroi latérale (33).

4. Procédé de fabrication d'une bouteille en polyester dans l'outil de moulage selon les revendications 1 à 3, **caractérisé en ce que** la bouteille (13) est fabriquée dans l'outil de moulage (11) avec un temps de cycle variant entre 1,8 et 2 secondes.
